# EUROPÄISCHE PATENTSCHRIFT

(11) **EP 0 386 513 B1**
(45) Veröffentlichungstag und Bekanntmachung des Hinweises auf die Patenterteilung: **01.06.1994**
(21) Anmeldenummer: 90103170.8
(22) Anmeldetag: 19.02.1990
(51) Int. Cl.: B60J 10/04

(54) **Profilrahmen aus elastomerem Material und Verfahren zu seiner Herstellung**
Profile frame of an elastomer and method for manufacturing the same
Encadrement profilé à matière élastomère et procédé pour sa fabrication

(30) Priorität: 09.03.1989 DE 3907691; 24.01.1990 DE 4002026
(43) Veröffentlichungstag der Anmeldung: 12.09.1990
(73) Patentinhaber: METZELER Automotive Profiles GmbH, D-88131 Lindau (DE)
(72) Erfinder: Brachmann, Walter, D-8000 München 80 (DE); Müller, Hans, D-3180 Wolfsburg 1 (DE)
(74) Vertreter: Seibert, Hannelore

(56) Entgegenhaltungen:
- EP-A- 0 171 821
- BE-A- 551 617
- FR-A- 2 477 998
- US-A- 4 291 076

## Beschreibung

Die Erfindung bezieht sich auf einen Profilrahmen aus elastomerem Material, insbesondere für bewegliche Scheiben in Kraftfahrzeugen, mit einem eine metallische Verstärkung aufweisenden, U-förmigen Klemmprofil und einer von der Profilbasis schräg abragenden Dichtlippe, sowie Verfahren zur Herstellung derartiger Profilrahmen.

Solche Profilrahmen, die auf den das Fenster umgebenden Türrahmen in Kraftfahrzeugen aufgesteckt sind und einerseits zur Fensterführung und andererseits zur Abdichtung gegen Regen dienen, weisen im allgemeinen auf jeder Fensterkante eine unterschiedliche Dichtlippenlänge auf, wobei diese an der Fensterunterkante am längsten ist, da hier auch die Abdichtwirkung am größten sein muß.

Üblicherweise werden derartige Profilrahmen derart hergestellt, daß für jede Kante ein gesondertes Profil unterschiedlichen Querschnittes gefertigt wird, auf Länge geschnitten und an den Fensterecken über einvulkanisierte Übergangsstücke zu einem geschlossenen Rahmen fertiggestellt wird.

Ein solcher Profilrahmen ist in der Herstellung jedoch sehr aufwendig, da er eine große Anzahl von Arbeitsschritten erfordert, wodurch eine große Fehlerhäufigkeit und damit eine hohe Ausschußrate möglich ist.

Aus der EP-A-0 171 821 ist zwar ein Fensterführungsprofil für die obere und die vertikale Kante einer Fensterscheibe bekannt, das jedoch aus unterschiedlichen Grundprofilen besteht und bei dem nur eine Dichtlippe in der Ecke mit kontinuierlich verändertem Querschnitt ausgebildet ist, um hier einen kontinuierlichen Übergang von einer Profilart auf die nächste sicherzustellen.

Demgegenüber liegt der vorliegenden Erfindung die Aufgabe zugrunde, einen Profilrahmen zu schaffen und entsprechende Herstellungsverfahren anzugeben, mit denen auf sehr einfache Weise in praktisch einem einzigen Arbeitsgang ein solcher Profilrahmen kontinuierlich hergestellt werden kann.

Zur Lösung dieser Aufgabe ist erfindungsgemäß vorgesehen, daß das Klemmprofil und die Dichtlippe aus einem die Fensteröffnung auf mindestens drei Seiten umgebenden; einstückigen, kontinuierlich extrudierten Profil konstanten Grundquerschnittes bestehen, dessen Dichtlippen an den Profilabschnitten jeder Fensterkante einen unterschiedlichen Querschnitt derart aufweisen, daß die Dichtlippen aufeinanderfolgend auf Fensterunterkante, Fensterseitenkante und Fensteroberkante jeweils mit kürzerer Länge ausgebildet sind und jeweils in den Fensterecken einen kontinuierlichen Übergang von einem Querschnitt auf den nachfolgenden aufweisen.

Damit ist also ein einstückiger Profilrahmen mit unterschiedlichen Dichtlippen bzw. unterschiedlicher Dichtlippenlänge geschaffen.

Bezüglich der metallischen Verstärkung ist es zweckmäßig, wenn diese aus Aluminium oder Stahl besteht und in den U-förmigen Klemmprofilbereichen so geführt ist, daß der eine Schenkel innerhalb des einen Profilschenkels und der andere Schenkel auf der Sicht-Außenseite des anderen Profilschenkels als Zierleiste geführt ist.

Dabei können die freiliegenden Bereiche der Verstärkungseinlage aus Aluminium nach der Endverformung des Rahmens eloxiert sein.

Bei einem Verfahren zur Herstellung derartiger Profilrahmen ist erfindungsgemäß vorgesehen, daß das die Fensteröffnung auf mindestens drei Seiten umgebende Profil zunächst mit einer Dichtlippe in Form des größten geforderten Querschnittes fortlaufend einstückig extrudiert und anschließend vor der Ausvulkanisation des Profils die Dichtlippe abschnittsweise entsprechend dem jeweils geforderten Querschnitt an den einzelnen Fensterkanten zurückgeschnitten wird.

Mit einem derartigen Verfahren ist es also auf einfache Weise möglich, einen das Fenster auf drei Seiten umgebenen Profilrahmen aus einem Stück herzustellen, wobei die Übergänge auf unterschiedliche Dichtlippenlängen kontinuierlich in einem Arbeitsgang geschaffen werden können, ohne daß gesonderte Zwischenstücke einvulkanisiert werden müssen.

Zweckmäßig ist es dabei, wenn die Übergänge der Profilkontur von einem Dichtlippenquerschnitt auf den nächsten im Bereich der Fensterecken mittels eines einen stetig abnehmenden Querschnitt bewirkenden Schnittes erfolgt.

Der Übergangsbereich kann dabei entsprechend der Länge des entlang einem Kreisbogen verlaufenden Profilabschnittes in den Fensterecken ausgebildet werden.

Bei einem weiteren Verfahren zur Herstellung eines solchen Profilrahmens ist erfindungsgemäß vorgesehen, daß das die Fensteröffnung auf mindestens drei Seiten einstückig umgebende Profil derart extrudiert wird, daß der freie Austrittsquerschnitt des Extrudermundstückes jeweils entsprechend dem geforderten Dichtlippenquerschnitt eingestellt und nachgeregelt wird.

Damit ist es also möglich, bereits bei der Extrusion die gewünschten unterschiedlichen Dichtlippenlängen bzw. Dichtlippenquerschnitte zu erhalten.

Der freie Querschnitt des Extrudermundstückes kann dabei abschnittsweise kontinuierlich verringert werden.

Dabei kann der Extruderdruck kontinuierlich an die sich verändernden freien Querschnitte angepaßt werden. Es ist aber auch möglich, daß bei sich verringerndem Querschnitt des Extrudermundstückes überschüssige Extrudatteilmenge rezirkuliert wird.

Anhand einer schematischen Zeichnung sind Aufbau und Funktionsweise von Ausführungsbeispielen nach der Erfindung näher erläutert. Dabei zeigen
- Fig. 1: eine Seitenansicht des Fensterbereichs eines Kraftfahrzeuges,
- Fig. 2: einen Querschnitt durch einen Profilrahmen im Bereich der Fensterunterkante entsprechend der Schnittlinie II-II nach Fig. 1,
- Fig. 3: einen Querschnitt durch den Profilrahmen im Bereich der B-Säule entsprechend der Schnittlinie III-III nach Fig. 1,
- Fig. 4: einen Querschnitt durch den Profilrahmen an der Oberkante des Fensters entsprechend der Schnittlinie IV-IV nach Fig. 1,
- Fig. 5: eine Aufsicht in verkürzter Darstellung auf den Profilrahmen mit unterschiedlicher Dichtlippenlänge entsprechend den Figuren 2 bis 4,
- Fig. 6 - 8: entsprechende Querschnitte durch ein ähnliches Profil mit teilweise freiliegender Verstärkungseinlage als Zierleiste und
- Fig. 9: eine perspektivische Teilansicht eines Profils entsprechend Fig. 6 bis 8.

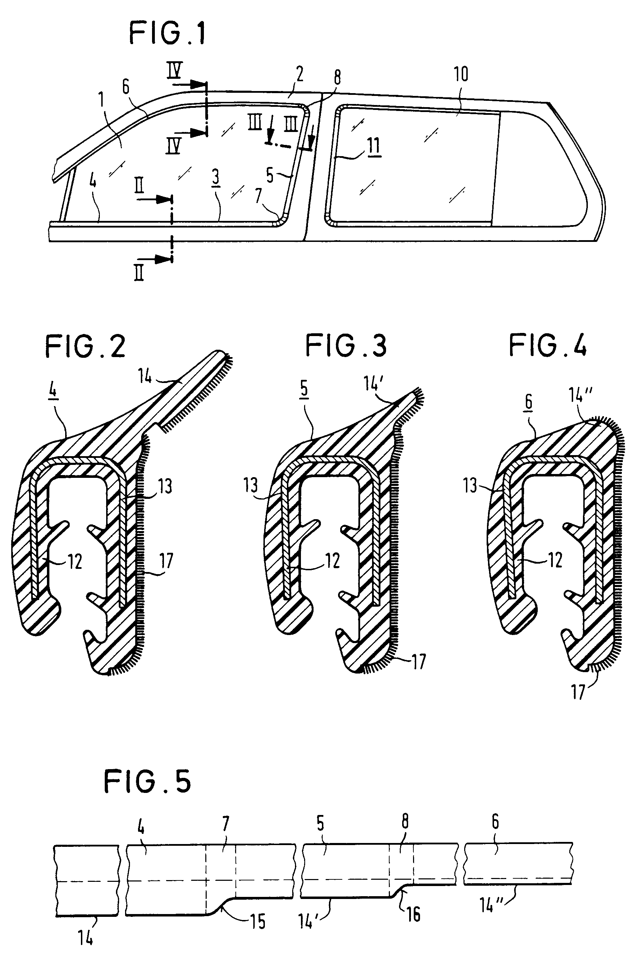

Wie man aus Fig. 1 ersieht, ist das Fenster 1 in der Vordertür 2 eines Kraftfahrzeuges von einem durchgehenden Profilrahmen 3 zur Führung und Abdichtung der Scheibe umzogen. Dieser Profilrahmen 2 setzt sich aus drei Profilbereichen, nämlich dem Profilabschnitt 4 an der Unterkante, dem Profilabschnitt 5 an der Seitenkante der B-Säule und dem Profilabschnitt 6 entlang der Oberkante des Fensters 1 zusammen, die in den Fensterecken über gebogene Profilabschnitte 7 und 8 miteinander in Verbindung stehen. Das Hinterfenster 10 weist dabei einen entsprechend zusammengesetzten Profilrahmen 11 auf.

Der Profilrahmen 3 bzw. 11 hat bezüglich des unteren Profilabschnitts einen Querschnitt, wie er für die Schnittlinie II-II in Fig. 2 dargestellt ist. Danach besteht dieses Profil 4 aus einem U-förmigen Profilteil 12 mit einer metallischen Verstärkungseinlage 13, um damit festhaftend auf einen entsprechenden Türflansch aufgesteckt zu werden. Von diesem U-förmigen Profilbereich 12 ragt seitlich eine Dichtlippe 14 ab, die bei dem Profilabschnitt 4 an der Unterkante des Fensters relativ lang ist, um eine gute Dichtwirkung gegen Feuchtigkeit zu erreichen.

Wie man aus Fig. 1 und den entsprechenden Schnitten nach Fig. 2, 3 und 4 ersieht, weist der Profilrahmen 3 zwar in allen drei Profilabschnitten 4, 5 und 6 den gleichen Grundkörper 12 auf, jedoch ändert sich Länge und Querschnitt der Dichtlippe 14, und zwar weist diese im Bereich des Profilabschnitts 5 nach Fig. 3 in eine kürzere Dichtlippe 14′ und im Bereich des Profilabschnitts 6 entsprechend Fig. 4 nur noch einen kurzen Dichtlippenansatz 14'' auf.

Nach der vorliegenden Erfindung wird nun der Profilrahmen 3 einstückig fortlaufend hergestellt und zwar auf folgende Weise:
Das Profil wird zunächst mit einem Querschnitt extrudiert, wie er in Fig. 2 dargestellt ist, d.h. mit einer Dichtlippe 14 von der größten erforderlichen Länge. Unmittelbar anschließend an die Extrusion, d.h. noch vor der Vulkanisation des Profils, wird nach Erreichen der vorgegebenen Länge für den Profilabschnitt 4 - wie in der Aufsicht auf das Profil nach Fig. 5 zu sehen ist - die Dichtlippe 14 entsprechend dem stetigen Schnitt 15 auf die Dichtlippenlänge 14′ mit entsprechendem Querschnitt zurückgeschnitten. Die Verkürzung der Dichtlippe 14 auf die Dichtlippe 14′ erfolgt dabei allein über einen Bereich der unteren Fensterecke, wie er dem Profilabschnitt 7 entspricht.

Nach Erreichen der erforderlichen Länge für den Profilabschnitt 5 erfolgt ein weiterer Rückschnitt 16 auf die Dichtlippenlänge 14'' für den oberen Profilabschnitt 6. Dieser Rückschnitt 16 liegt dabei in der oberen Profilecke 8.

Nach Erreichen der erforderlichen Länge für den Profilabschnitt 6 wird dann zweckmäßigerweise die Schneidvorrichtung wieder ausgefahren, um anschließend den nächsten Profilrahmen mit der für den Profilabschnitt 4 wieder vollständigen Dichtlippe 14 und den nachfolgenden Rückschnitten zu erhalten.

Nach anschließender Ausvulkanisation des durchlaufenden Profils kann dann unmittelbar auf die an der Scheibe anliegenden Profilfläche eine Beflockung 17 aufgebracht und schließlich das Profil in die entsprechenden Profilrahmen abgeteilt werden.

Der jeweils erforderliche Rückschnitt erfolgt dabei zweckmäßigerweise vollautomatisch, wobei - wie insbesondere aus Fig. 5 zu erkennen ist - ein stetiger Übergang entsprechend der Schnittkanten 15 und 16 von einer Dichtlippenlänge auf die nächstnachfolgende vorgesehen ist. Da dieser Rückschnitt jeweils im Bereich der Fensterecken liegt, ist damit auch die Optik gewahrt und es ergibt sich ein einheitlicheres Erscheinungsbild als mit gesondert zwischengesetzten Eckabschnitten.

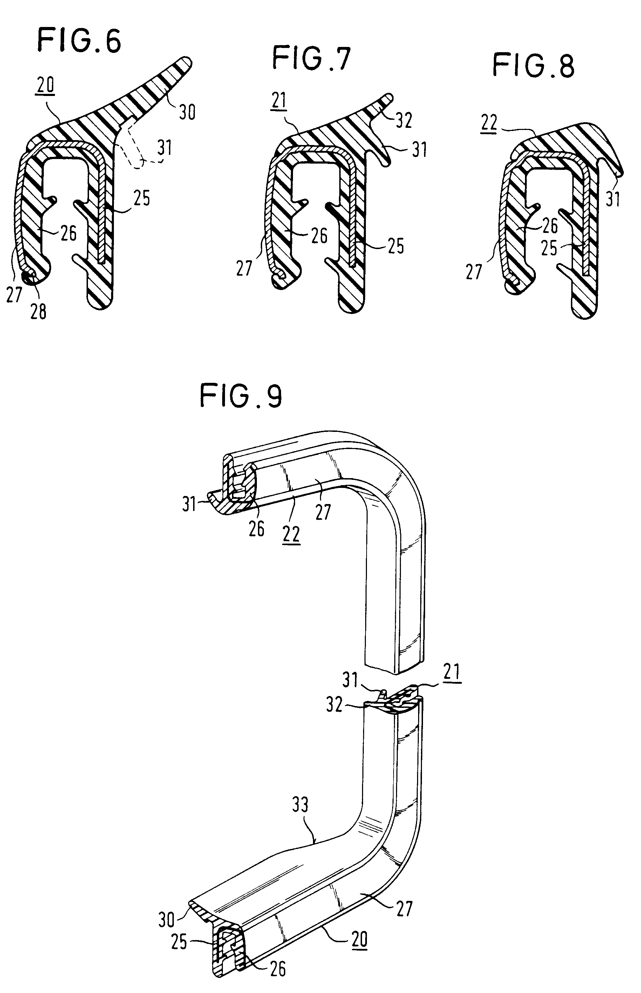

Eine weitere Ausgestaltungsmöglichkeit eines solchen Profilrahmens ist in den Fig. 6, 7 und 8 dargestellt.

Fig. 6 zeigt dabei einen Querschnitt durch den Profilabschnitt 20 für die Unterkante des Fensters auch entsprechend dem Querschnitt II-II nach Fig. 1. Dabei ist zunächst die innenliegende Verstärkungseinlage 25, die zweckmäßigerweise aus Aluminium oder rostfreiem Stahl besteht, so geführt, daß sie im außenliegenden Schenkel 26 des Profils 20 auf dessen Sichtseite außen liegt und damit zusätzlich als Zierleiste 27 fungiert. Das untere Ende 28 ist dabei zweckmäßigerweise in das Material des Profilschenkels 26 zurückgeführt, um einen festen Halt zu gewährleisten und ein Abschälen zu verhindern.

Das dargestellte Profil wird ebenfalls mit dem größten erforderlichen Querschnitt extrudiert, d.h. zunächst mit der großen schräg abragenden Dichtlippe 30 und der kleineren, nur gestrichelt dargestellten Dichtlippe 31, die schräg nach unten abragt. Für die Unterseite des Fensters kann dann von dem zugehörigen Profilabschnitt 20 die kleine Dichtlippe 31 abgeschnitten werden, so daß sich ein Profilquerschnitt ergibt, wie er in Fig. 6 voll ausgezogen dargestellt ist.

Im Übergangsbereich zum nachfolgenden Profilabschnitt 21 entlang der B-Säule entsprechend Fig. 7 wird dann die große Dichtlippe 30 aus Fig. 6 auf eine kleinere Dichtlippe 32 zurückgeschnitten und die ursprünglich extrudierte, nach unten abragende Dichtlippe 31 stehengelassen.

Für die Oberseite des Fensters erfolgt dann ein Rückschnitt entsprechend dem Profilquerschnitt 22 nach Fig. 8, wobei jetzt nur noch die nach unten gerichtete Dichtlippe 31 stehenbleibt.

In Fig. 9 ist in perspektivischer Ansicht dann der fertig geformte Profilrahmen im Breich der B-Säule mit den anschließenden Profilabschnitten 20 und 22 für Ober- und Unterseite des Fensters gezeigt. Besonders deutlich erkennt man dabei am Verlauf der Kontur 33 den Rückschnitt von der langen Dichtlippe 30 auf die kürzere Dichtlippe 32 entlang der B-Säule. Hier ist auch der sich über den gesamten Umfang erstreckende freiliegende Bereich der Verstärkungseinlage 25 als Zierleiste 27 zu erkennen. Bei einer Herstellung der Verstärkungseinlage 25 aus rostfreiem Stahl ist eine Nachbehandlung wegen der dauerhaft glänzenden Oberfläche nicht erforderlich. Bei einer Herstellung aus Aluminium kann jedoch dann der freiliegende Zierleistenbereich 27 nach abschließender Verformung des Profilrahmens noch am Profilrahmen eloxiert werden, um damit eine dauerhafte und farbmäßig abgestimmte Oberfläche dieser Zierleist 27 zu erhalten.

Anstelle eines automatischen Zurückschneidens der Dichtlippe nach der Extrusion des Profils und vor seiner endgültigen Vulkanisation ist es aber auch möglich, das Profil gleich mit der entsprechenden Kontur zu extrudieren. Dazu wird der Austrittsquerschnitt des Extrudermundstückes jeweils entsprechend dem geforderten Dichtlippenquerschnitt eingestellt und nachgeregelt. Dabei wird zweckmäßigerweise jeweils mit dem größten Profilquerschnitt angefangen und an den jeweiligen Übergangsbereichen der Austrittsquerschnitt des Extrudermundstückes kontinuierlich so weit zugefahren, bis der nachfolgende Profilquerschnitt erreicht ist. Damit ergibt sich dann ebenfalls ein Profilverlauf, wie er in Fig. 5 dargestellt ist.

Um eine gleichmäßige Kontur des Profils zu erhalten, muß bei der Querschnittsverringerung dann auch entsprechend der Druck bzw. die Drehzahl des Extruders zurückgefahren werden. Es ist aber auch möglich, die bei sich verringerndem Querschnitt des Extrudermundstückes überschüssige Extrudatteilmenge abzutrennen und zurückzuführen, so daß dann mit konstantem Druck gefahren werden kann.

Mit den beschriebenen Verfahren ist es also auf einfache Weise möglich, einen Profilrahmen mit unterschiedlicher Dichtlippenlänge auf den verschiedenen Profilbereichen entlang des Fensterausschnittes zu erhalten. Gleichzeitig kann dabei in einem Arbeitsgang auch eine integrale Zierleiste erhalten werden, ohne daß dafür zusätzliche Manipulationen erforderlich wären.

## Patentansprüche

1. Profilrahmen (3) aus elastomerem Material, insbesondere für bewegliche Scheiben in Kraftfahrzeugen, mit einem eine metallische Verstärkung (13; 25) aufweisenden U-förmigen Klemmprofil (12; 26) und einer von der Profilbasis schräg abragenden Dichtlippe (14; 30), dadurch gekennzeichnet, daß das Klemmprofil und die Dichtlippe aus einem die Fensteröffnung (1) auf mindestens drei Seiten umgebenden, einstückigen, kontinuierlich extrudierten Profil (3) konstanten Grundquerschnittes bestehen, dessen Dichtlippen (14; 30; 31) an den Profilabschnitten (4, 5, 6; 20, 21, 22) jeder Fensterkante einen unterschiedlichen Querschnitt (14, 14', 14''; 30, 31, 32) aufweisen derart, daß die Dichtlippen (14, 14', 14'') aufeinanderfolgend auf Fensterunterkante, Fensterseitenkante und Fensteroberkante jeweils mit kürzerer Länge ausgebildet sind und jeweils in den Fensterecken (7, 8) einen kontinuierlichen Übergang (15, 16; 33) von einem Querschnitt auf den nachfolgenden aufweisen.

2. Profilrahmen nach Anspruch 1, dadurch gekennzeichnet, daß die metallische Verstärkung aus Aluminium oder Stahl besteht und in den U-förmigen Klemmprofilbereichen (20, 21, 22) so geführt ist, daß der eine Schenkel (25) innerhalb des einen Profilschenkels und der andere Schenkel (27) auf der Sicht-Außenseite des anderen Profilschenkels als Zierleiste geführt ist.

3. Profilrahmen nach Anspruch 2, dadurch gekennzeichnet, daß die freiliegenden Bereiche (27) der Verstärkungseinlage aus Aluminium nach Endverformung des Rahmens eloxiert sind.

4. Verfahren zur Herstellung eines Profilrahmens nach Anspruch 1, dadurch gekennzeichnet, daß das die Fensteröffnung auf mindestens drei Seiten umgebende Profil (3) zunächst mit einer Dichtlippe (14; 30) in Form des größten geforderten Querschnittes fortlaufend einstückig extrudiert und anschließend vor der Ausvulkanisation des Profils (3) die Dichtlippe (14; 30) abschnittsweise entsprechend dem jeweils geforderten Querschnitt an den einzelnen Fensterkanten zurückgeschnitten wird.

5. Verfahren nach Anspruch 4, dadurch gekennzeichnet, daß der Übergang der Profilkontur von einem Dichtlippenquerschnitt (14, 14', 14''; 30, 31, 32) auf den nächsten im Bereich der Fensterecken mittels eines einen stetig abnehmenden Querschnitt (15, 16; 33) bewirkenden Schnittes erfolgt.

6. Verfahren nach Anspruch 5, dadurch gekennzeichnet, daß der Übergangsbereich (15, 16; 33) entsprechend der Länge des entlang einem Kreisbogen verlaufenden Profilabschnittes in den Fensterecken ausgebildet wird.

7. Verfahren zur Herstellung eines Profilrahmens nach Anspruch 1, dadurch gekennzeichnet, daß das die Fensteröffnung auf mindestens drei Seiten einstückig umgebende Profil (3) derart extrudiert wird, daß der freie Austrittsquerschnitt des Extrudermundstückes jeweils entsprechend dem geforderten Dichtlippenquerschnitt (14, 14', 14''; 30, 31, 32) eingestellt und nachgeregelt wird.

8. Verfahren nach Anspruch 7, dadurch gekennzeichnet, daß der freie Querschnitt des Extrudermundstückes abschnittsweise kontinuierlich verringert wird.

9. Verfahren nach Anspruch 7 oder 8, dadurch gekennzeichnet, daß der Extruderdruck kontinuierlich an die sich verändernden freien Querschnitte angepaßt wird.

10. Verfahren nach Anspruch 7 oder 8, dadurch gekennzeichnet, daß die bei sich verringerndem Querschnitt des Extrudermundstückes überschüssige Extrudatteilmenge rezirkuliert wird.

## Claims

1. Profile frame (3) of an elastomer, particularly for movable panes in motor vehicles, with a U-shaped clamping profile (12; 26) having a metallic reinforcement (13; 25) and a sealing lip (14; 30) projecting at an angle from the profile base, characterized in that the clamping profile and the sealing lip comprise a one-piece, continuously extruded profile (3) of constant basic cross-section which surrounds the window opening (1) on at least three sides, the sealing lips (14; 30; 31) of which have a different cross-section (14, 14', 14''; 30, 31, 32) at the profile sections (4, 5, 6; 20, 21, 22) of each window edge in such a way that the sealing lips (14, 14', 14'') are designed with a shorter length successively on window bottom edge, window side edge and window top edge and have a continuous transition (15, 16; 33) from one cross-section to the next in the window corners (7, 8).

2. Profile frame according to Claim 1, characterized in that the metallic reinforcement comprises aluminium or steel and is guided into the U-shaped clamping profile areas (20, 21, 22) in such a way that one leg (25) is inserted inside one profile leg and the other leg (27) is placed on the visible outer side of the other profile leg as a trim.

3. Profile frame according to Claim 2, characterized in that the exposed areas (27) of the aluminium reinforcement insert are anodized following the final deformation of the frame.

4. Method for manufacturing a profile frame according to Claim 1, characterized in that the profile (3) which surrounds the window opening on at least three sides is initially continuously extruded in one piece with a sealing lip (14; 30) in the shape of the largest cross-section that is required and then, before the full vulcanization of the profile (3), the sealing lip (14; 30) is cut back in sections according to the cross-section that is required at the individual window edges.

5. Method according to Claim 4, characterized in that the transition of the profile contour from one sealing lip cross-section (14, 14', 14''; 30, 31, 32) to the next in the area of the window edges is achieved by means of a cut which brings about a continuously decreasing cross-section (15, 16; 33).

6. Method according to Claim 5, characterized in that the transition area (15, 16; 33) is formed according to the length of the profile section running along a circular arc in the window corners.

7. Method for manufacturing a profile frame according to Claim 1, characterized in that the profile (3) which surrounds the window opening on at least three sides in one piece is extruded in such a way that the free outlet cross-section of the extruder die is set and re-adjusted according to the desired sealing lip cross-section (14, 14', 14''; 30, 31, 32) in each case.

8. Method according to Claim 7, characterized in that the free cross-section of the extruder die is continuously reduced in sections.

9. Method according to Claim 7 or 8, characterized in that the extruder pressure is continuously adapted to the changing free cross-sections.

10. Method according to Claim 7 or 8, characterized in that the partial quantity of extrudate that is superfluous when the cross-section of the extruder die is reduced is recirculated.

## Revendications

1. Encadrement (3) profilé en matière élastomère, notamment pour des vitres mobiles de véhicule automobile, comprenant un profilé (12 ; 26) de serrage en forme de U et ayant un renfort (13; 25) métallique et une lèvre (14; 30) d'étanchéité partant en oblique de la base du profilé, caractérisé en ce que le profilé de serrage et la lèvre d'étanchéité sont constitués d'un profilé (3) de section transversale de base constante extrudé en continu, d'une seule pièce, entourant la baie (1) de la fenêtre sur au moins trois côtés et dont les lèvres (14; 30, 31) d'étanchéité ont sur chaque partie (4, 5, 6; 20, 21, 22) de profilé de chaque bord de la fenêtre une section transversale (14, 14', 14''; 30, 31, 32) différente, de manière que les lèvres (14, 14', 14'') d'étanchéité, se succédant sur le bord inférieur de la fenêtre, les bords latéraux de la fenêtre et le bord supérieur de la fenêtre soient formés chacune de tronçons assez courts et présentent chacune aux coins (7, 8) de la fenêtre une transition (15, 16 ; 33) continue d'une section transversale à la suivante.

2. Encadrement profilé suivant la revendication 1, caractérisé en ce que le renfort métallique est en aluminium ou en acier et passe dans les parties (20, 21, 22) du profilé de serrage en forme de U, de façon que l'une des branches (25) passe dans l'une des branches du profilé et l'autre (27) passe du côté extérieur visible de l'autre branche du profilé en tant qu'enjoliveur.

3. Encadrement profilé suivant la revendication 2, caractérisé en ce que les parties (27) dégagées de l'insert de renfort en aluminium sont anodisées après formation définitive de l'encadrement.

4. Procédé de fabrication d'un encadrement profilé suivant la revendication 1, caractérisé en ce qu'il consiste à extruder d'une seule pièce en continu le profilé (3) entourant la baie de fenêtre sur au moins trois côtés, d'abord avec une lèvre (14; 30) d'étanchéité sous la forme de la section transversale exigée la plus grande, et ensuite, avant la vulcanisation du profilé (3), à redécouper la lèvre (14; 30) d'étanchéité par partie en fonction de la section transversale exigée sur les divers bords de la fenêtre.

5. Procédé suivant la revendication 4, caractérisé en ce qu'il consiste à effectuer la transition du contour du profilé d'une section transversale (14, 14', 14''; 30, 31, 32) de lèvres d'étanchéité à la suivante dans la zone des coins de la fenêtre au moyen d'une coupe donnant une section transversale (15, 16; 33) constamment décroissante.

6. Procédé suivant la revendication 5, caractérisé en ce qu'il consiste à former la partie (15, 16; 33) de transition en fonction de la longueur de la partie de profilé s'étendant suivant un arc de cercle dans les coins de la fenêtre.

7. Procédé de fabrication d'un encadrement profilé suivant la revendication 1, caractérisé en ce qu'il consiste à extruder le profilé (3) entourant d'une seule pièce la baie de la fenêtre sur au moins trois côtés, et à régler et à rajuster la section transversale libre de sortie de l'embouchure de l'extrudeuse en fonction de la section transversale (14, 14', 14''; 30, 31, 32) de lèvre d'étanchéité qui est exigée.

8. Procédé suivant la revendication 7, caractérisé en ce qu'il consiste à diminuer la section transversale libre de l'embouchure de l'extrudeuse d'une manière continue par tronçon.

9. Procédé suivant la revendication 8, caractérisé en ce qu'il consiste à adapter la pression de l'extrudeuse continuellement aux sections transversales libres qui se modifient.

10. Procédé suivant la revendication 7 ou 8, caractérisé en ce qu'il consiste à remettre en circulation la quantité d'extrudat en excès lorsque la section transversale de l'embouchure de l'extrudeuse diminue.
